Europäisches Patentamt

European Patent Office

Office européen des brevets

(11) Veröffentlichungsnummer: **0 306 828 B1**

# EUROPÄISCHE PATENTSCHRIFT

(45) Veröffentlichungstag der Patentschrift: **03.02.93**

(21) Anmeldenummer: **88114259.0**

(22) Anmeldetag: **01.09.88**

(51) Int. Cl.⁵: $C01B\ 33/32$

(54) Verfahren zum Herstellen von hydrothermalen Wassergläsern.

(30) Priorität: **09.09.87 DE 3730146**
**29.07.88 DE 3825874**

(43) Veröffentlichungstag der Anmeldung:
**15.03.89 Patentblatt 89/11**

(45) Bekanntmachung des Hinweises auf die
Patenterteilung:
**03.02.93 Patentblatt 93/05**

(84) Benannte Vertragsstaaten:
**AT BE CH DE ES FR GB IT LI LU NL SE**

(56) Entgegenhaltungen:
**EP-A- 0 033 108**
**EP-A- 0 164 073**
**BE-A- 649 739**

**CHEMICAL ENGINEERING, Band 69, Nr. 3, 5. Februar 1962, Seiten 76-78, New York, US; F.C. PRICE: "New: Liquid-process sodium silicate"**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Reinhardt, Helmut, Dr.**
**Auf Dem Stumpelrott 9**
**W-5000 Köln 50 (Rodenkirchen)(DE)**
Erfinder: **Abitzsch, Günther**
**Käulchensweg 38**
**W-5000 Köln 91 (Poll)(DE)**

**Beschreibung**

Die Erfindung betrifft ein Verfahren zum hydrothermalen Herstellen von Natrium-Silikatlösungen mit einem $SiO_2$ : $Na_2O$-Gewichtsverhältnis von 1,95 bis 1,6 : 1 durch Umsetzen von Sand, Natriumhydroxid und Wasser.

Von den unter der Bezeichnung "Wasserglas" bekannten Alkalimetallsilikatlösungen finden für technische Zwecke am häufigsten Natriumsilikatlösungen - gemeinhin als Natronwasserglas bezeichnet - Verwendung. Derartige Natronwassergläser weisen überwiegend einen Feststoffgehalt von etwa 30 bis 40 Gew.-% sowie ein Gewichtsverhältnis $SiO_2$ : $Na_2O$ von 3,3 bis 3,4 : 1 auf.

Die bekannte Herstellung derartiger Natronwassergläser erfolgt durch Zusammenschmelzen von Quarzsand und Soda in Öfen bei Temperaturen von 1400 bis 1500 °C unter Freisetzung von $CO_2$. Die beim Abkühlen erstarrende Schmelze, das sogenannte Stükkenglas, wird in einem weiteren Verfahrensschritt unter Anwendung von Druck und erhöhter Temperatur in Wasser gelöst und die erhaltende Lösung gegebenenfalls filtriert.

Durch Vermischen dieser Lösungen mit Natronlauge lassen sich alkalireichere Natriumsilikatlösungen mit einem niedrigeren $SiO_2$/$Na_2O$-Gewichtsverhältnis gewinnen. Dieses Verfahren ist jedoch zum Erhalt von alkalireichen Wassergläsern mit einem Gewichtsverhältnis $SiO_2$ : $Na_2$ von etwa 2 : 1 sowohl apparativ als auch hinsichtlich der Energiemengen sehr aufwendig und bedingt hohe Energie- und Anlagenkosten.

Ein weiteres bekanntes Verfahren zur Herstellung von Natronwassergläsern besteht in einem Aufschluß von Sand mit Hilfe wäßriger Natronlauge unter hydrothermalen Bedingungen. Die Verfahrensprinzipien dieses Hydrothermalprozesses sind seit langem bekannt (z. B. DE-PS 24 47 79 und Chemical Engineering 5, 76 (1962)). Wegen der nur unbefriedigenden Raum-/Zeitausbeuten und erheblicher Schwierigkeiten bei der Abtrennung und Filtration der hochviskosen Reaktionslösung erlangten diese Verfahren keine großtechnische Bedeutung.

Gemäß BE-PS 64 97 39 ist es bekannt, die Schwierigkeiten bei der Aufbereitung des Reaktionsgemisches dadurch zu umgehen, daß das Reaktionsprodukt vom überschüssigen kieselsäurehaltigen Material und/oder von den unlöslichen verunreinigenden Stoffen mittels Filtrierelementen, die in der Nähe des Reaktorbodens angebracht sind, abgetrennt wird, wobei diese Filtration vorteilhaft unter ähnlichen Temperatur- und Druckbedingungen erfolgen soll, wie sie bei der vorangegangenen Hydrothermalsynthese herrschen. Die Gesamtreaktionszeit liegt bei ca. 8 bis 9 h. Aus dieser Schrift ist ferner zu entnehmen, daß die Reaktionsgeschwindigkeit beim Einsatz von 50%iger Natronlauge tiefer als bei Verwendung von 30%iger liegt.

Gemäß EP-PS 0 033 108 ist es bekannt, Wasserglas aus Sand und wäßriger Natronlauge auf hydrothermalem Wege mit einem hohen Überschuß an Sand herzustellen. Die Abtrennung der ungelösten Feinanteile erfolgt außerhalb des Reaktors nach Entspannung und Abkühlung des Reaktionsgemisches auf etwa 100 °C. Dieses unterschiedliche technische Konzept hat nicht nur erheblichen Einfluß auf den Aufbau der Anlage selbst, sondern auch auf die erzielbare Raum-/Zeitausbeute. Während bei Vorgehen gemäß BE-PS 64 97 39 eine vierstündige Reaktionszeit sowie eine gleich lange Zeit für die reaktorinterne Filtration erforderlich sind, verringert sich gemäß EP-PS 0 033 108 die Reaktionszeit auf 120 Min.

Im Hinblick auf ein kostenoptimales Hydrothermalverfahren zur Herstellung von Natriumsilikatlösung aus Sand und Natronlauge mit einem Gewichtsverhältnis $SiO_2$ : $Na_2O$ von etwa 2 : 1 ist die nach der EP-PS 0 033 108 erforderliche Reaktionszeit noch zu lang. Darüber hinaus erfordert der hohe Sandüberschuß in der Reaktionsmischung das Recycling des nicht verbrauchten Sandes im Anschluß an die Filtration und ein Ausschleusen der bei der Filtration aufkonzentrierten Verunreinigungen des Sandes (wie z. B. $Al_2O_3$, MgO, CaO, $TiO_2$).

Aus der DE-OS 34 21 158 ist es bekannt, Natriumsilikat-Lösungen mit einem Modul ($SiO_2$ : $Na_2O$) von 1,9 bis 2,1 : 1 aus Sand und Natronlauge herzustellen, wobei man einen Sandüberschuß von 5 bis 10 Gew.-% einhält.

Die Filtration wird unter Verwendung des überschüssigen Sandes und unter Zusatz eines zusätzlichen Filterhilfsmittels in einem Anschwemmfilter durchgeführt.

Bei der großtechnischen Durchführung des bekannten hydrothermalen Verfahrens zur Herstellung von Natriumsilikat-Lösung mit einem Modul von 1,9 bis 2,1 : 1 mußten entweder aufwendige Filtrationsvorrichtungen,wie z. B. Anschwemmfilter eingesetzt werden oder es traten erhebliche Schwierigkeiten auf, weil sich der überschüssige Sand mit bekannten Abtrennvorrichtungen, wie z. B. dem Schrägklärer nicht vollständig aus der Natriumsilikat-Lösung abtrennen ließ. Dabei traten Verstopfungen in den Leitungen sowie Störungen in Pumpen auf, weil die Suspension von überschüssigem Sand in der Natriumsilikat-Lösung schnell aushärtet.

Gemäß der EP-PS 0 033 108, Vergleichsbeispiel 2 b ist es weiterhin bekannt, Wasserglas auf

2

EP 0 306 828 B1

hydrothermalem Wege ohne Sandüberschuß herzustellen.

Dabei wird in der Reaktionsmischung, wenn man für den eingesetzten Sand einen $SiO_2$-Anteil von 96 Gew.-% annimmt, ein Verhältnis von $SiO_2$ : $Na_2O$ = 2,02 verwendet. Jedoch ist bei diesem Mischungsverhältnis selbst bei einer Reaktionstemperatur von 225 °C die Reaktionsdauer mit 4 Stunden für den vollständigen Sandumsatz sehr lang.

Der Erfindung liegt die Aufgabe zugrunde, ein Hydrothermalverfahren der eingangs genannten Art zu entwickeln, bei dem die erhaltene Natriumsilikatlösung einen erheblich geringeren Sandrückstand aufweist.

Diese Aufgabe wird erfindungsgemäß bei einem Verfahren der eingangs genannten Art dadurch gelöst, daß man den Sand im stöchiometrischen Unterschuß im Vergleich zu dem Ansatz-Gewichtsverhältnis 2 : 1 und bei Temperaturen zwischen 190 und 240°C umsetzt.

Insbesondere wird vorgeschlagen, daß man mit einem $SiO_2$ : $Na_2O$-Gewichtsverhältnis von 1,9 ± 0,05 : 1, bei Reaktionstemperaturen von 200 bis 230°C, bei den diesen Temperaturen entsprechenden Drücken von gesättigtem Wasserdampf, und mit Natronlauge im Konzentrationsbereich von 36,5 bis 47,5 Gew.-% arbeitet und die Reaktion zu einem Umsatz von mindestens 99,7 %, bezogen auf Sand, führt.

Es zeigte sich nämlich, daß bei einem Arbeiten ohne Sandüberschuß die in der dann entstehenden Wasserglaslösung enthaltenen Restfeststoffe einer Weiterverarbeitung des Wasserglases, z. B. zu Zeolith nicht im Wege stehen. Es zeigte sich auch, daß eine Reinigung der Lösungen durch Filtration nicht notwendig ist.

Überraschenderweise wurde gefunden, daß bei einer Natronlaugekonzentration von bis zu 47,5 Gew.-% Na OH, bezogen auf Wasser, die Reaktionszeit noch nicht ansteigt, obwohl nach der BE-PS 64 97 39 bei 50 %iger Lauge ein Anstieg der Reaktionszeit beobachtet wird.

In einer besonders vorteilhaften Ausgestaltung wird vorgeschlagen, daß man Sand mit wäßriger Natronlauge vermischt, wobei das Verhältnis von $SiO_2$ : $Na_2O$ 8 : 4,45 ± 0,3 beträgt, gegebenenfalls weiteres Wasser hinzufügt und die erhaltene Reaktionsmischung mit den Molverhältnissen $SiO_2$ : $Na_2O$ = 1,927 bis 1,68 : 1, vorzugsweise 1,8 : 1 und der maximalen molaren Konzentration von

$SiO_2$ : $H_2O$ = 1 : 3
$Na_2O$ : $H_2O$ = 1 : 6

in einem Autoklaven während einer Zeit von 35 ± 5 Minuten auf eine Temperatur von 215 ± 5 °C erhitzt.

Ferner wird vorgeschlagen, daß zum Reinigen der erhaltenen Lösungen eine Sedimentationseinrichtung, insbesondere ein Schrägklärer, eingesetzt wird.

Die Angaben über den Wassergehalt der Reaktionsmischung stellen die Werte für die maximale Konzentration der Reaktionsmischung und damit auch der maximalen Konzentration des daraus resultierenden Wasserglases dar.

Bevorzugt wird Sand mit einem $SiO_2$-Gehalt von 96 ± 3 Gew.-% eingesetzt.

Die wäßrige Natronlauge kann einen Gehalt an $Na_2O$ von 50 Gew.-% aufweisen.

Das erfindungsgemäße Verfahren liefert ein Rohwasserglas mit einem Sandanteil von ≦ 2 g/l.

Eine Filtration des erfindungsgemäß hergestellten Wasserglases ist für die Weiterverwendung, z. B. zur Zeolithsynthese, nicht notwendig.

Sollte für besondere Anwendungszwecke eine weitergehende Sandfreiheit notwendig sein, kann durch Filtration mittels eines Schrägklärers der Sandanteil in dem Wasserglas auf weniger als 0,2 g/l gesenkt werden.

Besonders überraschend ist die kurze Reaktionszeit von 35 ± 5 Minuten, d. h., die Zeit, in der die Reaktionstemperatur bei 215 ± 5 °C gehalten wird.

**Beispiele**

Aus den Vorratsbehältern werden die Rohstoffe Sand und Natronlauge (50%ig) über eine Beschickungsanlage eingewogen und von dort in den 25-cbm-Autoklaven eingebracht. Der Ansatz enthält 8400 kg Sand (= 8000 kg $SiO_2$ und 400 kg Wasser) und 11 500 kg NaOH 50 % (= 4456 kg $Na_2O$). Dieser Ansatz wird mit 1000 l Wasser verdünnt. Die Natronlauge hat damit die Konzentration von 44,6 Gew.-%.

Die Reaktionsmischung hat die folgende molare Zusammensetzung:

$SiO_2$ : $Na_2O$ = 1,85 : 1
$Na_2O$ : $H_2O$ = 1 : 6,5
$SiO_2$ : $H_2O$ = 1 : 3,5

Der Autoklav wird nach dem Füllen mit oben beschriebenen Mengen verschlossen und im Verlauf von 15 bis 20 Minuten mit 21 bar Dampf auf die Reaktionstemperatur von ca. 215 °C gebracht. Diese Temperatur wird ca. 30 Minuten gehalten. Danach ist die Reaktion beendet; der Sand ist bis auf einen Rest von ca. 2 g/l als Natriumsilikat in Lösung gegangen.

3

Nach Absperren der Dampfzuführung wird der Autoklav über ein Tauchrohr mit der nachgeschalteten Anlage verbunden. Nach Öffnen des Entspannungsventils wird der Autoklaveninhalt unter Eigendruck in den Wasserglastank entleert. Der Gesamtzeitbedarf eines Ansatzes bestehend aus Rohstoffvorlage, Autoklavenbeschikkung, Aufheizen, Reaktion und Entleeren beträgt 120 Minuten.

In den nachfolgenden Tabellen werden Versuchsergebnisse dargestellt, aus denen die Reaktionsgeschwindigkeiten bei unterschiedlichen Konzentrationen von Natronlauge erkennbar sind.

## Versuchsreihe 1

**Löseversuche Sand und Natronlauge 1 bis 8 Stunden bei 200°C**

A) 30%ige Lauge : 54,5 g $SiO_2$; 69,0 g Na-Lauge 50%ig; 46,5 g Wasser

B) 42%ige Lauge : 67,6 g $SiO_2$; 85,7 g Na-Lauge 50%ig; 16,7 g Wasser

C) 50%ige Lauge : 75,0 g $SiO_2$; 95,0 g Na-Lauge 50%ig; kein zusätzliches Wasser

**Ansätze berechnet für Laborautoklaven 170 g**

|  |  |  |  |  |  |  |  |  | entspricht |  |
|---|---|---|---|---|---|---|---|---|---|---|
| Ver-such | Löse-zeit | g Sand ungelöst | g Sand gelöst | % Sand gelöst | g $Na_2O$ | Gew.-Verh. | % $Na_2O$ | % $SiO_2$ | % $H_2O$ | g gelöst gesamt |
| A | 1 h | 5,0 | 49,50 | 90,83 | 26,84 | 1,84 | 16,27 | 30,00 | 53,73 | 165,00 |
| B | 1 h | 5,3 | 62,30 | 92,16 | 33,34 | 1,87 | 20,24 | 37,83 | 41,43 | 164,70 |
| C | 1 h | 6,2 | 68,80 | 91,73 | 36,96 | 1,86 | 22,56 | 42,00 | 35,44 | 163,80 |
| A | 2 h | 1,8 | 52,70 | 96,70 | 26,84 | 1,96 | 15,96 | 31,33 | 52,71 | 168,20 |
| B | 2 h | 1,6 | 66,00 | 97,63 | 33,34 | 1,98 | 19,80 | 39,19 | 41,01 | 168,40 |
| C | 2 h | 1,7 | 73,30 | 97,73 | 36,96 | 1,98 | 21,96 | 43,55 | 34,49 | 168,30 |
| A | 3 h | 0,72 | 53,78 | 98,60 | 26,84 | 2,00 | 15,86 | 31,77 | 52,37 | 169,28 |
| B | 3 h | 0,60 | 67,00 | 99,11 | 33,34 | 2,01 | 19,68 | 39,55 | 40,77 | 169,40 |
| C | 3 h | 0,66 | 74,34 | 99,12 | 36,96 | 2,01 | 21,83 | 43,90 | 34,27 | 169,34 |

EP 0 306 828 B1

| Ver-such | Löse-zeit | g Sand ungelöst | g Sand gelöst | % Sand gelöst | g Na$_2$O | Gew.-Verh. | % Na$_2$O | entspricht % SiO$_2$ | % H$_2$O | g gelöst gesamt |
|---|---|---|---|---|---|---|---|---|---|---|
| A | 4 h | 0,30 | 54,20 | 99,45 | 26,84 | 2,02 | 15,82 | 31,94 | 52,24 | 169,70 |
| B | 4 h | 0,24 | 67,36 | 99,64 | 33,34 | 2,02 | 19,64 | 39,68 | 40,68 | 169,76 |
| C | 4 h | 0,27 | 74,73 | 99,64 | 36,96 | 2,02 | 21,78 | 44,03 | 34,19 | 169,73 |
| A | 5 h | 0,27 | 54,23 | 99,50 | 26,84 | 2,02 | 15,81 | 31,95 | 52,25 | 169,73 |
| B | 5 h | 0,11 | 67,49 | 99,84 | 33,34 | 2,02 | 19,62 | 39,73 | 40,65 | 169,89 |
| C | 5 h | 0,14 | 74,89 | 99,85 | 36,96 | 2,03 | 21,76 | 44,09 | 34,15 | 169,86 |
| A | 6 h | 0,11 | 54,39 | 99,80 | 26,84 | 2,03 | 15,80 | 32,01 | 52,19 | 169,89 |
| B | 6 h | 0,07 | 67,53 | 99,90 | 33,34 | 2,03 | 19,62 | 39,74 | 40,64 | 169,93 |
| C | 6 h | 0,08 | 74,92 | 99,89 | 36,96 | 2,03 | 21,75 | 44,09 | 34,16 | 169,92 |
| A | 7 h | 0,16 | 54,34 | 99,71 | 26,84 | 2,02 | 15,80 | 31,99 | 52,21 | 169,84 |
| B | 7 h | 0,07 | 67,53 | 99,90 | 33,34 | 2,03 | 19,62 | 39,74 | 40,64 | 169,93 |
| C | 7 h | 0,06 | 74,94 | 99,92 | 36,96 | 2,03 | 21,75 | 44,09 | 34,16 | 169,94 |
| A | 8 h | 0,17 | 54,33 | 99,69 | 26,84 | 2,02 | 15,80 | 31,99 | 52,21 | 169,83 |
| B | 8 h | 0,07 | 67,53 | 99,90 | 33,34 | 2,03 | 19,62 | 39,74 | 40,64 | 169,93 |
| C | 8 h | 0,08 | 74,92 | 99,89 | 36,96 | 2,03 | 21,75 | 44,09 | 34,16 | 169,92 |

EP 0 306 828 B1

Versuchsreihe 2

Löseversuche Sand und Natronlauge 1 bis 3 Stunden bei 225 °C

A) 30%ige Lauge : 54,5 g SiO$_2$; 69,0 g Na-Lauge 50%ig; 46,5 g Wasser

B) 42%ige Lauge : 67,6 g SiO$_2$; 85,7 g Na-Lauge 50%ig; 16,7 g Wasser

C) 50%ige Lauge : 75,0 g SiO$_2$; 95,0 g Na-Lauge 50%ig; kein zusätzliches Wasser

Ansätze berechnet für Laborautoklaven 170 g

| Ver- such | Löse- zeit | g Sand ungelöst | g Sand gelöst | % Sand gelöst | g Na$_2$O | Gew.- Verh. | entspricht | | | g gelöst gesamt |
|---|---|---|---|---|---|---|---|---|---|---|
| | | | | | | | % Na$_2$O | % SiO$_2$ | % H$_2$O | |
| A | 1 h | 0,84 | 53,66 | 98,46 | 26,84 | 2,00 | 15,87 | 31,72 | 52,41 | 169,16 |
| B | 1 h | 0,75 | 66,85 | 98,89 | 33,34 | 2,01 | 19,70 | 39,50 | 40,80 | 169,25 |
| C | 1 h | 0,86 | 74,14 | 98,85 | 36,96 | 2,01 | 21,85 | 43,83 | 34,32 | 169,14 |
| A | 2 h | 0,13 | 54,37 | 99,76 | 26,84 | 2,03 | 15,80 | 32,01 | 52,19 | 169,87 |
| B | 2 h | 0,10 | 67,50 | 99,85 | 33,34 | 2,02 | 19,62 | 39,73 | 40,65 | 169,90 |
| C | 2 h | 0,13 | 74,87 | 99,83 | 36,96 | 2,03 | 21,76 | 44,07 | 34,17 | 169,87 |
| A | 3 h | 0,04 | 54,46 | 99,93 | 26,84 | 2,03 | 15,79 | 32,04 | 52,17 | 169,96 |
| B | 3 h | 0,05 | 67,55 | 99,93 | 33,34 | 2,03 | 19,62 | 39,75 | 40,63 | 169,95 |
| C | 3 h | 0,06 | 74,94 | 99,92 | 36,96 | 2,03 | 21,75 | 44,10 | 34,15 | 169,94 |

**Patentansprüche**

1. Verfahren zum hydrothermalen Herstellen von Natriumsilikat-Lösungen mit einem SiO$_2$ : Na$_2$O-Gewichtsverhältnis von 1,95 bis 1,6 : 1 durch Umsetzen von Sand, Natriumhydroxid und Wasser, dadurch

7

gekennzeichnet, daß man den Sand im stöchiometrischen Unterschuß im Vergleich zu dem Ansatz-Gewichtsverhältnis 2 : 1 und bei Temperaturen zwischen 190 und 240°C umsetzt.

2. Verfahren zum Herstellen von hydrothermalen Wassergläsern nach Anspruch 1, dadurch gekennzeichnet, daß man mit einem $SiO_2$ : $Na_2O$-Gewichtsverhältnis von 1,9 ± 0,05 : 1, bei Reaktionstemperaturen von 200 bis 230 °C, bei den diesen Temperaturen entsprechenden Drücken von gesättigtem Wasserdampf,und mit Natronlauge im Konzentrationsbereich von 36,5 bis 47,5 Gew.-% arbeitet und die Reaktion zu einem Umsatz von mindestens 99,7 %, bezogen auf Sand, führt.

3. Verfahren nach Anspruch 1, dadurch gekennzeichnet, daß man Sand mit wäßriger Natronlauge vermischt, wobei das Verhältnis von $SiO_2$ : $Na_2O$ 8 : 4,45 ± 0,3 beträgt, gegebenenfalls weiteres Wasser hinzufügt und die erhaltene Reaktionsmischung mit den Molverhältnissen $SiO_2$ : $Na_2O$ = 1,927 bis 1,68 : 1, vorzugsweise 1,8 : 1 und der maximalen molaren Konzentration von
$SiO_2$ : $H_2O$ = 1 : 3
$Na_2O$ : $H_2O$ = 1 : 6
in einem Autoklaven während einer Zeit von 35 ± 5 Minuten auf eine Temperatur von 215 ± 5 °C erhitzt.

4. Verfahren nach einem der Ansprüche 1 bis 3, dadurch gekennzeichnet, daß zum Reinigen der erhaltenen Lösungen eine Sedimentationseinrichtung, insbesondere ein Schrägklärer, eingesetzt wird.

**Claims**

1. A process for the hydrothermal production of sodium silicate solutions with a ratio by weight of $SiO_2$ to $Na_2O$ of 1.95 to 1.6:1 by reaction of sand, sodium hydroxide and water, characterized in that the sand is reacted in less than the stoichiometric quantity compared with the mixing ratio by weight of 2:1 and at temperatures of 190 to 240°C.

2. A process for the production of hydrothermal water-glasses as claimed in claim 1, characterized in that it is carried out with a ratio by weight of $SiO_2$ to $Na_2O$ of 1.9 ± 0.05:1, at reaction temperatures of 200 to 230°C, under saturated steam pressures corresponding to those temperatures and with sodium hydroxide in a concentration range of 36.5 to 47.5% by weight and in that the reaction is continued to a conversion of at least 99.7%, based on sand.

3. A process as claimed in claim 1, characterized in that sand is mixed with aqueous sodium hydroxide, the ratio of $SiO_2$ to $Na_2O$ being 8:4.45 ± 0.3, more water is optionally added and the reaction mixture obtained, in which the molar ratio of $SiO_2$ to $Na_2O$ is from 1.927 to 1.68:1 and preferably 1.8:1 and the maximum molar concentration of $SiO_2$ to $H_2O$ is 1:3 and of $Na_2O$ to $H_2O$ 1:6, is heated in an autoclave for 35 ± 5 minutes to a temperature of 215 ± 5°C.

4. A process as claimed in any of claims 1 to 3, characterized in that a sedimentation unit, more particularly an inclined settler, is used to purify the solutions obtained.

**Revendications**

1. Procédé de fabrication hydrothermique de solutions de silicate de sodium ayant un rapport pondéral $SiO_2$ : $Na_2O$ allant de 1,95 à 1,6 : 1 en faisant réagir du sable, de l'hydroxyde de sodium et de l'eau, caractérisé en ce que l'on fait réagir le sable en quantité stoéchiométriquement insuffisante par rapport à la proportion pondérale nominale de 2 : 1 et à des températures comprises entre 190 et 240°C.

2. Procédé de fabrication de verres solubles hydrothermiques selon la revendication 1, caractérisé en ce que l'on effectue la réaction avec un rapport pondéral $SiO_2$ : $Na_2O$ = 1,9 ± 0,05 : 1, avec des températures de réaction de 200 à 230°C sous des pressions de vapeur d'eau saturée correspondant à ces températures et avec une concentration de solutions sodiques comprise dans la gamme de 36,5 à 47,5% en poids et en poursuivant la réaction jusqu'à l'obtention d'un taux de réaction d'au moins 99,7% rapporté au sable.

3. Procédé selon la revendication 1, caractérisé en ce que l'on mélange le sable avec une solution aqueuse sodique tandis que le rapport $SiO_2$ : $Na_2O$ est égal à 8 : 4,45 ± 0,3, que l'on ajoute éventuellement de l'eau et que l'on chauffe le mélange réactionnel avec des rapports molaires $SiO_2$ : $Na_2O$ = 1,927 à 1,68 : 1 et de préférence égaux à 1,8 : 1 et avec la concentration molaire maximale de

$SiO_2$ : $H_2O$ = 1 : 3
$Na_2O$ : $H_2O$ = 1 : 6
dans un autoclave pendant une durée de 35 ± 5 minutes et à une température de 215 ± 5°C.

4. Procédé selon l'une des revendications 1 à 3, caractérisé en ce que l'on utilise un dispositif de sédimentation et en particulier un clarificateur à tôles obliques pour purifier les solutions ainsi obtenues.